# EUROPEAN PATENT APPLICATION

(11) **EP 1 095 562 A2**
(43) Date of publication of application: **02.05.2001**
(21) Application number: 00122223.1
(22) Date of filing: 16.10.2000
(51) Int. Cl.: A01L 7/02

(54) **Composite insert for shoeing horse hooves**

(30) Priority: 25.10.1999 IT PD990236
(71) Applicant: Sponsor S.r.l., 31044 Biadene di Montebelluna (Treviso) (IT)
(72) Inventor: Grassi, Silvano, 31044 Montebelluna (Treviso) (IT)
(74) Representative: Modiano, Guido, Dr.-Ing.

(57) **Abstract**

A composite insert (10) for shoeing horse hooves, to be inserted between the hoof (12) and the shoe (15) of a horse, comprising at least three layers: at least one upper layer (11) which is made of semirigid material and is in contact with the hoof (12), at least one intermediate layer (13) which is made of a material having impact cushioning properties, and at least one lower layer (14) which is made of rigid material and is in contact with the shoe (15).

## Description

The present invention relates to a composite insert for shoeing horse hooves.

Nature created the horse with a different environmental context with respect to the one in which it is now placed by man.

Also the work imposed on this noble animal is not exactly what its instinct would lead it to do.

Prairies are very different from the paved roads or racecourses on which it is stressed into providing ever higher performance.

In racing, in particular, the impact of the front legs of the horse with the ground is particularly violent and such as to produce intense vibrations ("tuning-fork" effect) in the tendons and joints.

In the trotting gait, moreover, due to the particular racing technique in which the front legs are fully extended, the resulting vibration is even stronger.

For these reasons, horses often suffer tendinitis and inflammation of the joints.

It is known that horse hooves are provided with shoes which have a characteristic shape and merely transmit the stresses rigidly.

The aim of the present invention is to provide an insert for horse hooves which eliminates or substantially reduces the above-noted problems.

A consequent primary object of the invention is to provide an insert for hooves which attenuates the vibration transmitted to the legs of the horse through the hooves.

Another object is to provide an insert which has not only preventative functions but also rehabilitative functions for animals in which the pathological condition is already in progress.

Another object is to provide an insert which is easy and inexpensive to manufacture.

Another object is to provide an insert which can be easily applied to the hoof of the horse.

This aim and these and other objects which will become better apparent hereinafter are achieved by a composite insert for shoeing horse hooves, to be inserted between the hoof and the shoe of a horse, characterized in that it comprises at least three layers: at least one upper layer which is in contact with the hoof, at least one intermediate layer which is made of a material which has vibration-damping properties, and at least one lower layer which is in contact with the shoe.

Further characteristics and advantages of the present invention will become better apparent from the following detailed description of a preferred but not exclusive embodiment thereof, illustrated only by way of non-limitative example in the accompanying drawings, wherein:
Figure 1 is a view of an insert according to the invention, applied to the leg of a horse;
Figure 2 is a plan view of the insert of Figure 1;
Figure 3 is an exploded perspective view of Figure 1;
Figure 4 is a sectional view of Figure 2, taken along the line I-I.

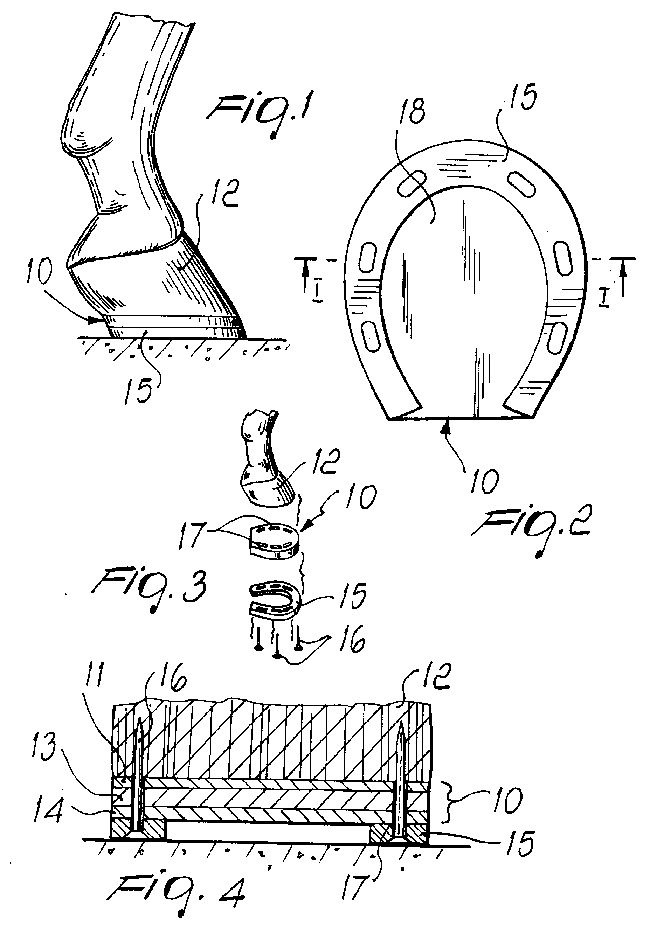

With reference to Figures 1 to 4, an insert for horse hooves according to the invention is generally designated by the reference numeral 10.

The insert 10 is constituted by at least three layers which are glued to each other: at least one upper layer 11, which is made of thermoplastic polyurethane and is in contact with a hoof 12 of the horse; at least one intermediate layer 13, which is made of rubber or of a material having equivalent vibration-damping properties, and at least one lower layer 14, which is made of thermoplastic polyurethane having an appropriate hardness and is arranged in contact with a shoe 15.

The insert 10 is thus arranged between the hoof 12 and the shoe 15 and finally stably secured in the assembled condition by means of nails 16 that fix the shoe 15 to the hoof 12.

The layers 11 and 14 are designed to protect the intermediate layer 13 against wear and breakage.

It is possible to provide the insert with through holes 17 for the fixing nails 16.

The surface dimensions 18 of the insert 10 are abundant with respect to the footprint of the hoof 12, so as to make it universal.

The protruding material can be easily removed by means of a bladed tool.

Advantageously, the upper layer 11 and the lower layer 14 can also be obtained by overmolding performed in a mold over the rubber layer 13.

It has been observed that the present invention has achieved the intended aim and objects.

The insert has an important preventative effect, allowing to avoid tendinitis and inflammations of the articulations.

In addition to the preventative effect, this insert also has a therapeutic effect.

If used when the pathological condition is already occurring, it facilitates the rehabilitation of the animal.

The present invention is susceptible of modifications and variations, all of which are within the scope of the inventive concept.

The constructive details can be replaced with other technically equivalent elements.

The materials and the dimensions may be any according to requirements.

The disclosures in Italian Patent Application No. PD99A000236 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A composite insert (10) for shoeing horse hooves, to be inserted between the hoof (12) and the shoe (15) of a horse, characterized in that it comprises at least three layers: at least one upper layer (11) which is in contact with the hoof (12), at least one intermediate layer (13) which is made of a material having vibration-damping properties, and at least one lower layer (14) which is in contact with the shoe (15).

2. The composite insert according to claim 1, characterized in that said at least one intermediate layer (13) made of material having vibration-damping properties is microporous rubber.

3. The composite insert according to claim 1, characterized in that said at least one upper layer (11) and said at least one lower layer (14) are made of polyurethanes.

4. The composite insert according to claim 3, characterized in that said at least one upper and lower layers (11,14) are glued to said at least one intermediate layer (13).

5. The composite insert according to claim 3, characterized in that said at least one upper and lower layers (11,14) are overmolded over said at least one intermediate layer (13).
